# EUROPEAN PATENT SPECIFICATION

(11) **EP 0 866 200 B1**
(45) Date of publication and mention of the grant of the patent: **28.05.2003**
(21) Application number: 98104598.2
(22) Date of filing: 13.03.1998
(51) Int. Cl.: E05F 15/00, E05F 15/16, E05D 13/00

(54) **Overhead door responsive to impacts against obstacles**
Überkopftor das auf Schlag gegen Hindernisse reagiert
Porte basculante sensible aux impacts contre des obstacles

(30) Priority: 17.03.1997 IT VR970022
(43) Date of publication of application: 23.09.1998
(60) Divisional application: 02028119.2
(73) Proprietor: Taddei, Silvio, 38057 Pergine (IT)
(72) Inventor: Taddei, Silvio, 38057 Pergine, Trento (IT)
(74) Representative: Reniero, Cirillo Silvano

(56) References cited:
- EP-A- 0 468 678
- EP-A- 0 713 949
- DE-A- 3 232 365
- DE-A- 3 545 057
- FR-A- 2 188 026
- US-A- 3 693 026
- US-A- 5 157 230
- "CHIUSURE SICURE" NUOVA FINESTRA, vol. 17, no. 11, November 1996, page 51 XP000704385

## Description

The present invention relates to an overhead door which can be stopped automatically during both downward and upward movements in the case of impact against an obstacle.

Overhead garage doors may constitute, while being closed or opened, a source of danger for the safety of people or objects which might accidentally be on the path of motion of the door. It would therefore be desirable to be able to ensure immediate stop of the door should its path be obstructed in any way, thereby providing maximum safety in any dangerous condition.

A vertically slidable not swinging door having one tubular sensor means designed to act as a limit switch an impact against the ground is disclosed in EP-A-0 713 949.

An object of the present invention is to provide an. overhead door capable of simply and reliably meeting the above requirement by being arranged to stop against an obstacle and to automatically reverse its motion to return. to its fully open or closed initial position.

Another object of the present invention is to provide an overhead door with modular elements which can be easily and quickly assembled at the installation site.

Another object of the present invention is to provide an overhead door of high performance which can be manufactured at a competitive production costs.

These and other objects which will become more clearly apparent hereinafter are achieved by an overhead door according to the present invention having a swinging mechanism and fixed lateral sliding guides, comprising: a pair of sensor means whereby each of which includes a beam emitter and receiver element placed in a respective tubular element made of flexible material, the said sensor means being arranged to act independently of each other in response to impacts on either the inner lower edge and the outer lower edge of the door, whereby when one of the tubular elements abuts against an obstacle it is deformed and cuts off the light beam between the emitter and its respective receiver element; the door further comprising en electronic control unit which is designed to receive input signals generated by at least one of said sensor means and to generate output control signals to control said swinging mechanism; characterized in that at least one of said tubular elements is provided with an internal longitudinal diaphragm arranged in a plane substantially parallel to the plane of the door and passing through the center axis of the tubular element to divide its inner cavity into two longitudinal compartments, with said beam emitter and receiver elements arranged in the outermost compartment in respect of the center plane of the door.

Advantageously, the said swinging door comprises a plurality of modular panels, an upper longitudinal member and a lower longitudinal member for quick assembly of the panels, the said sensor means being arranged on opposite sides on said lower longitudinal member.

Further features and advantages of the overhead door according to the present invention will become apparent from the following detailed description of a preferred but not exclusive embodiment thereof made with reference to the accompanying drawings, wherein:
Figure 1 is a schematic perspective exploded view of the structure of an overhead door according to the present invention;
Figure 2 shows a detail on an enlarged-scale of Figure 1;
Figure 3 is a view similar to that of Figure 1 according to a constructional modification;
Figure 4 is an enlarged-scale perspective view of a detail of Figure 3;
Figure 5 is an enlarged-scale perspective exploded view of another detail of Figure 3; and
Figure 6 is a partial side view of Figure 5.

In the accompanying drawings, identical or similar parts or components have been designated by the same reference numerals.

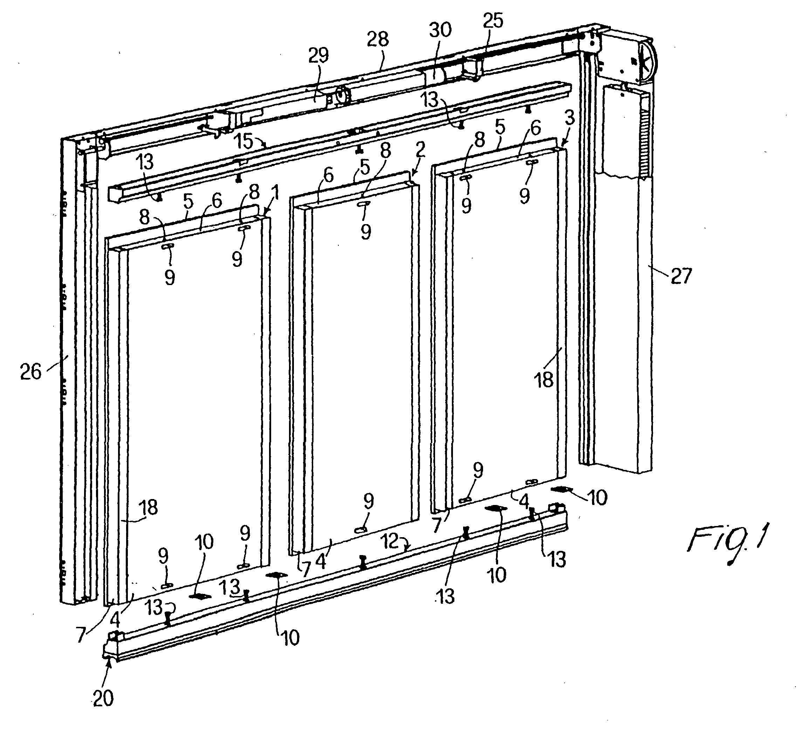

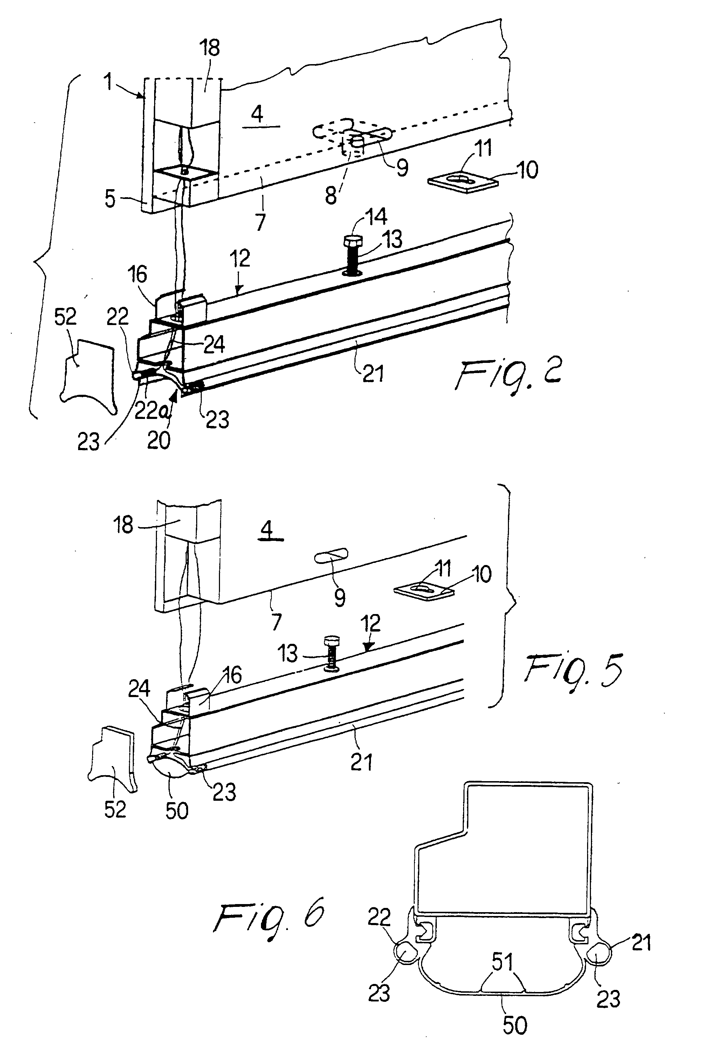

With reference first to Figures 1 and 2, it will be seen that a door according to the present invention comprises a swinging door leaf comprising two or more modular panels 1, 2 and 3, each of which is formed by a box-like frame 4, e.g. made of metal, which is covered, at its face designed to be directed outwards in use, by a cladding 5, for example made of wood paneling strips which delimit an upper abutment and a lower abutment with the respective box-like frame 4. In particular, the panels 1, 2 and 3 have a respective upper wall 6 and a lower wall 7 in which a number of spaced holes 8 are provided, for example two. A respective transverse access slot 9 is formed at each hole 8 on the face of each box-like frame which is directed inwards.

A transversely slidable plate 10 is fitted at each hole 8 and inside the box-like frames 4 and has a slot 11 with two lobes which have a different internal span and are in communication with one another, as described in greater detail in Figure 2.

The modular panels 1, 2 and 3 are designed to rest on a lower tubular longitudinal member 12 from which bolts 13 with respective hexagonal heads extend upwards. The number of the bolts is equal to the number of holes 8 provided in the lower walls 7 of the modular panels. Each bolt 13 can be screwed into a respective nut (not shown in the drawings) which is welded inside the longitudinal member 12. Before being assembled, the plates 10 are arranged so as to have their wider lobe axially aligned with the underlying hole 8, so that by resting the panels 1, 2 and 3 appropriately on the longitudinal member 12, the bolts 13 of the member 12 are seated into the respective holes 8 and pass through the respective plate 10 with their head.

The operator, by acting through the slots 9, moves then the plates 10 manually so as to locate their smaller lobe at the stem of the respective bolt 13 and screws the bolt by acting with a wrench through the respective slot 9, thereby tightening the head of the bolt 13 against the plate 10 which acts as a fixing washer. In this manner, each panel 1, 2 and 3 is fixed to the longitudinal member 12 in alignment with the other panels. If required, the operator can then seal the slots 9.

The same is done for fixing of the panels 1, 2 and 3 at the top thereof to a tubular longitudinal member 15 which also has bolts 13, whereby a single operator can quickly and effortlessly perform the whole assembly at the installation site of an overhead door, even if the door has considerable overall dimensions, e.g. when the door leaf comprises five modular panels.

The lower longitudinal member 12 has, at its ends, a bracket 16 which is so dimensioned as to penetrate a respective tubular upright 18 of an inner frame 4 of one of the end panels 1 and 3.

A longitudinal trimming or faceplate 20 is applied in any suitable manner, e.g. glued, underneath the longitudinal member 12. The said trimming is made of a flexible material, such as rubber, and extends over the inner lower edge (i.e., the edge directed towards the space that the door is designed to close) and the outer lower edge of the longitudinal member 12 and thus of the door leaf. On the inner and the outer front, the faceplate 20 delimits two tubular longitudinal cavities 21 and 22, which extend along the entire length of the door and stick out both downwardly and laterally beyond the said door, so as to make sure to be the first part that abuts against any obstacles along the path of the door both while being opened and closed.

An emitter photocell 23 of any suitable type is located at one end of each tubular cavity 21 and 22 and illuminates a surface which is reflecting or otherwise sensitive to the light emitted by the emitter photocell (which is not shown in the drawings and of any suitable type) located at the other end of the tubular cavity. The photocells 23 are electrically connected by means of a respective cable 24 to an electronic control unit, e.g. an electronic control card generally designated by the reference numeral 25.

The door according to the present invention further comprises two equipped flanks 26 and 27 which have fixed slide guides and an upper cross-member 28 for interconnecting the flanks, the said cross-member 28 supporting an actuation mechanism 29 driven by an electric motor 30 which is controlled by the electronic card 25 and designed to produce the swinging movements of the door, e.g. as disclosed in Italian patent 1.216.428.

The system formed by the tubular cavities and the photocells 23 constitutes a sensor means arranged to act in response to any impacts both on the outer and the inner edge of the door, since as a consequence of an impact at least one of the cavities 21 or 22 is deformed, thus cutting off the light beam between the photocell and the reflecting or sensitive surface, which results in the respective photocell emitting a signal which is received by the electronic card 25. The latter, in turn, generates an output control signal to cause the electric motor 30 to stop and reverse its direction of rotation thereby causing the door to return to its starting position, if the door 5 was being closed upon compression of the outer cavity 21, or to simply stop if the door was being opened upon compression of the inner cavity 22.

Accordingly, substantially total safety against possible damages to people and objects both during closure (lowering) and opening (lifting) of the door is ensured in a relatively simple, quick and effective manner.

The invention described above is susceptible to numerous modifications and variations within the scope of protection defined by the tenor of the appended claims.

Thus, for example, a trimming or faceplate 20 provided with tubular longitudinal cavities 21 and 22 and a sensor system based on photocells 23 or any other suitable system, e.g. of the type that includes electric contacts, may be provided along both sides of the door for greater safety as set out, for example, in claim 10.

It is possible to increase the sensitivity and speed of response, in particular of the outer cavity 21, also when the door is fully open, by providing an internal diametrical longitudinal diaphragm, arranged parallel to the laying plane of the door to divide the space inside the cavity 21 into two longitudinal compartments (an outermost and an innermost compartment) and by arranging the light source (emitter 23) in the outer compartment. In this manner, the photocell 23 is sensitive to even relatively small compressions to quickly act in response to the presence of obstacles also when the door is in its raised fully open position, where a one-compartment cavity would be otherwise more rigid by being urged in a region too close to its support.

It is also possible to apply suitable tubular trimmings provided with a photocell sensor system or any other suitable system also on the lower part of the inner face of each panel 1, 2 and 3 to avoid in any circumstance people to be hurt or objects to be damaged during closure or lowering of the door, as set out in claim 2.

Thus, for example, below the outer tubular element 22 it is advantageously possible to provide a flexible longitudinal extension 22a which extends parallel to the laying plane of the door, so that when the door is in its fully closed position the extension 22a is slightly deformed against the threshold to hermetically close the gap between the threshold and the door.

Figures 3 to 6 illustrate an embodiment, similar to that shown in Figures 1 and 2, which comprises a device 40, which makes it possible to adjust both the thrust force while the door is being opened and the braking or damping force which is applied to the door, while the latter is being closed. The device 40 comprises an oblong body or block 41 which can be fixed in any suitable manner, e.g. by means of screws or by welding, to the door, preferably to the panel 3 adjacent to the equipped flank 27, which is provided with a pulley 42, a counterweight 43 and a (metallic) cable 44 extending around the pulley 42 for suspending the weight.

A longitudinal through slot 45 is formed in the oblong body 41 and a pin 46 provided with a control head 47 can slide in the slot. At the lower end of the block 46 a stop element 48 is provided which is rigid with, or fixed to, the body 41 and to which one end of the cable 44 is secured, the counterweight 43 being hung to the other end of the cable.

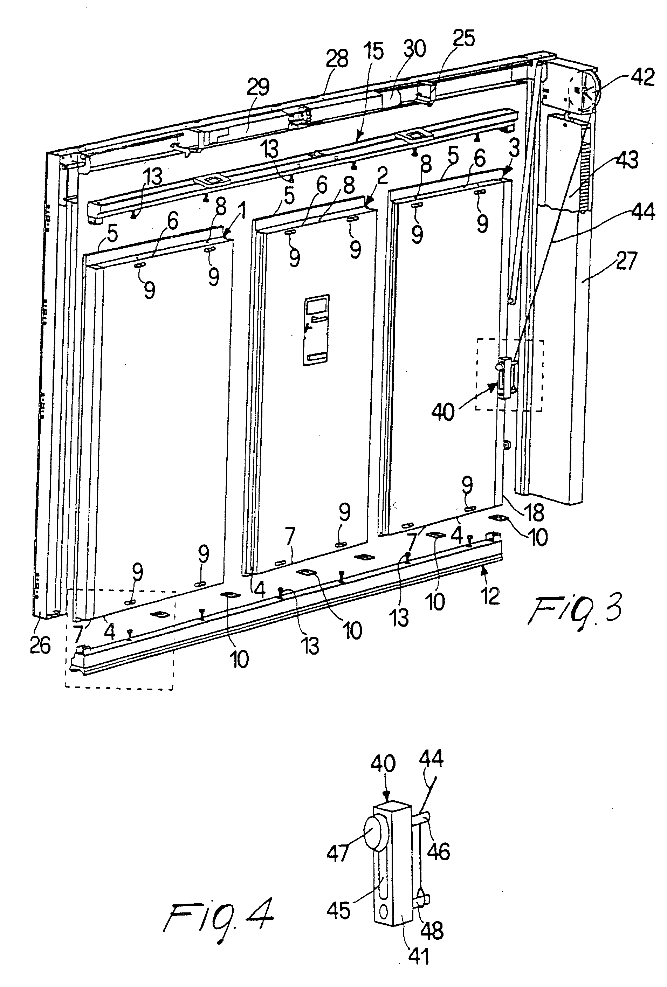

Since the block 41 is offset with respect to the laying plane of the pulley 42, the cable reaches the stop element 48 at an angle with respect to the vertical, its inclination being adjustable by changing the position of the cable engagement pin 46 (Figure 4).

As the angle of the cable 44 changes, so does the load or thrust applied to the door during initial opening stage and the damping thrust at the end of the closing operation.

By suitably adjusting the position of the pin 46 along the slot 45, the door is prevented from slamming against its fixed frame and an (adjustable) thrust for starting the opening operation is produced.

Moreover, a flexible membrane 50 (Figures 5 and 6) straddles the two tubular cavities 21 and 22 and is designed to close with a good sealing effect the gap between the lower longitudinal member 12 and the threshold when the door is in its closed position.

The membrane 50 is preferably provided with internal stiffening ribs 51.

Advantageously, the ends of the tubular longitudinal member 12 can be closed by a respective removable covering faceplate 52 (Figure 5), which, when required, can be removed, e.g. for maintenance purposes.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An overhead door provided with a swinging mechanism (42,43,44) and fixed lateral sliding guides, comprising:
a pair of sensor means (21,22,23) whereby each of which includes a beam emitter and receiver element placed in a respective tubular element (21,22) made of flexible material, the said sensor means (21,22,23) being arranged to act independently of each other in response to impacts on either the inner lower edge (22) and the outer lower edge (21) of the door, whereby when one of the tubular elements (20,22) abuts against an obstacle it is deformed and cuts off the light beam between the emitter and its respective receiver element;
the door further comprising en electronic control unit (25) which is designed to receive input signals generated by at least one of said sensor means (21,22,23) and to generate output control signals to control said swinging mechanism;
**characterized in that**
at least one of said tubular elements (21,22) is provided with an internal longitudinal diaphragm arranged in a plane substantially parallel to the plane of the door and passing through the center axis of the tubular element to divide its inner cavity into two longitudinal compartments, with said beam emitter and receiver elements arranged in the outermost compartment in respect of the center plane of the door.

2. A door according to claim 1, **characterized in that** each one of said sensor means (21, 22, 23) comprises a plurality of sensor elements (23) which are located in strip-like lengths (21, 22) of flexible material which are arranged at the lower part of the inner and outer face of the door.

3. A door according to claim 1 or 2, **characterized in that** each tubular element and (21, 22) extends along the entire length of the door and locates at one end thereof a photocell (23) or light- emitting source which is electrically connected to said control unit (25) and, at its other end, a reflective surface or a surface which is arranged to act in response to the light-emitting source, whereby when one of the tubular elements (21, 22) abuts against an obstacle it is deformed and cuts off the light beam between the emitting source and its respective sensitive element, thereby controlling the said control unit (25).

4. A door according to any claim 1 to 3, **characterized in that** the said flexible tubular elements (21, 22) are a component of a trimming element (20) extending along and overlapping, the outer and inner lower edges of the door, thereby protruding on the inner and the outer front of the door, the tubular element on the outer edge (21) acting in response to obstacles during opening, whereas the tubular element on the inner edge (22) acts in response to obstacles hit while the door is being closed.

5. A door according to claim 4, **characterized in that** the said tubular element (21) on the outer edge is designed to stop said swinging mechanism (42, 43, 44) upon collision.

6. A door according to claim 4, **characterized in that** the said tubular element (22) on the inner edge is designed to reverse the angular movement of the door upon collision.

7. A door according to any preceding claim, **characterized in that** said diaphragm is arranged in the inner tubular element (22), to divide its cavity into a compartment adjacent to the door and a distal compartment, and **in that** said emission source (23) emits light beams and said receiver element receives light beams in and along said distal compartment.

8. A door according to any claim 4 to 7, **characterized in that** each tubular element (21, 22) is provided with a flexible longitudinal rib (22a) which extends substantially parallel to the laying plane of the door.

9. A door according to claim 4, **characterized in that** said trimming element (20) comprises a flexible membrane (50) which extends over said tubular elements (21, 22) to effectively seal the door in its closed position.

10. A door according to claim 1, **characterized in that** it comprises sensor means (21,22,23) also on the sides of the door.

11. A door according to claim 1, **characterized in that** the said door comprises a plurality of box-like modular panels (1, 2, 3), an upper longitudinal member (15) and a lower longitudinal member (12) for stiffening and quick assembly of the panels (1, 2, 3), and bolt means (13) for securing each modular panel to each longitudinal member.

12. A door according to claim 11, **characterized in that** the said longitudinal members (12, 15) are tubular and said securing means comprises a plurality of bolts (13) projecting from and screwable into said longitudinal members; at least one opening (9) throughout the thickness of each box-like modular panel (1, 2, 3) for seating a respective bolt (13) projecting from a longitudinal member, and a sliding plate (10) which has through openings (11) delimiting lights of different size, is arranged at a respective opening (9) inside each box-like panel (1, 2, 3), and is arranged to be moved from a rest position, in which it can receive the head of a bolt (13), to a working position, in which it engages the head of said bolt (13) and acts as a fixing washer for the bolt (13).

13. A door according to claim 1, **characterized in that** it comprises a device (40) for adjusting the thrust force while the door is being opened and the damping force while the same is being closed, the said device comprising an oblong body (41) which can be fixed to the door, an anchoring element (48) fixed to the door for a cable (44) to which a counterweight (43) for the door is hung by means of a pulley (42), and a pin (46) which can be moved along said oblong body and is arranged to engage said cable (44) to vary its tension.

14. A door according to claim 13, **characterized in that** said oblong body (41) comprises a through slot (45) inside which said pin (46) is slidingly arranged and **in that** said fixed anchoring element (48) is provided on said oblong body (41).

## Patentansprüche

1. Überkopftor mit einem Schwingmechanismus (42, 43, 44) und fixierten, seitlichen Gleitführuhgen umfassend:
ein Paar von Sensormitteln (21, 22, 23), wobei jedes derselben ein Strahlsende- und -Empfangselement aufweist, die in einem zugehörigen rohrförmigen Element (21, 22) aus flexiblem Material angeordnet sind, wobei die Sensormittel (21, 22, 23) so angeordnet sind, dass sie unabhängig voneinander in Anwort auf Stöße auf entweder die innere untere Kante (22) oder die äußere untere Kante (21) des Tores wirken, wobei, wenn eines der rohrförmigen Elemente (20, 22) gegen ein Hindernis stößt, es deformiert wird und den Lichtstrahl zwischen dem Sendeelement und dem entsprechenden Empfangselement unterbricht;
wobei das Tor ferner eine elektronische Steuereinheit (25) umfasst, die so ausgeführt ist, dass sie Eingangssignale empfängt, die von wenigstens einem der Sensormittel (21, 22, 23) erzeugt werden, und Ausgangssteuersignale erzeugt, um den Schwingmechanismus zu steuern;
**dadurch gekennzeichnet, dass**
wenigstens eines der rohrförmigen Elemente (21, 22) mit einer internen, in Längsrichtung verlaufenden Trennwand ausgestattet ist, die in einer Eben im Wesentlichen parallel zu der Ebene des Tores angeordnet ist und durch die Mittelachse des rohrförmigen Elements verläuft, um seinen Innenraum in zwei in Längsrichtung verlaufende Kammern zu unterteilen, wobei die Strahlsende- und Empfangselemente in der äußeren Kammer im Bezug auf die Mittelebene des Tores angeordnet sind.

2. Tor nach Anspruch 1, **dadurch gekennzeichnet, dass** jedes der Sensormittel (21, 22, 23) eine Vielzahl von Sensorelementen (23) umfasst, die in streifenförmigen Längen (21, 22) von flexiblem Material liegen, die an dem unteren Teil der inneren und äußeren Oberfläche des Tores angeordnet sind.

3. Tor nach Anspruch 1 oder 2, **dadurch gekennzeichnet, dass** jedes rohrförmige Element (21, 22) sich entlang der gesamten Länge des Tores erstreckt und an einem Ende davon eine Fotozelle (23) oder eine lichtemittierende Quelle, die elektrisch mit der Steuereinheit (25) verbunden ist, und an ihrem anderen Ende eine reflektierende Oberfläche oder eine Oberfläche liegt, die so angeordnet ist, dass sie in Antwort auf die lichtemittierende Quelle wirksam wird, wobei, wenn eines der rohrförmigen Elemente (21, 22) gegen ein Hindernis stößt, es deformiert wird und den Lichtstrahl zwischen der emittierenden Quelle und ihrem zugehörigen, sensitiven Element unterbricht, wodurch die Steuereinheit (25) gesteuert wird.

4. Tor nach einem der Ansprüche 1 bis 3, **dadurch gekennzeichnet, dass** die flexiblen rohrförmigen Elemente (21, 22) Bestandteile eines Trimmelements (20) sind, welche sich entlang den äußeren und inneren unteren Kanten des Tores erstreckt und diese überlappt, wobei das rohrförmige Element auf der äußeren Kante (21) in Antwort auf Hindernisse während des Öffnens wirksam wird, während das rohrförmige Element auf der inneren Kante (22) in Antwort auf Hindernisse wirksam wird, auf die gestoßen wird, wenn das Tor geschlossen wird.

5. Tor nach Anspruch 4, **dadurch gekennzeichnet, dass** das rohrförmige Element (21) auf der äußeren Kante so ausgeführt ist, dass der Schwingmechanismus (42, 43, 44) bei einer Kollision gestoppt wird.

6. Tor nach Anspruch 4, **dadurch gekennzeichnet, dass** das rohrförmige Element (22) auf der inneren Kante so ausgeführt ist, dass es die Winkelbewegung des Tors bei einer Kollision umkehrt.

7. Tor nach einem der vorhergehenden Ansprüche, **dadurch gekennzeichnet, dass** die Trennwand in dem inneren rohrförmigen Element (22) angeordnet ist, um seinen Innenraum in eine Kammer neben dem Tor und eine distale Kammer zu unterteilen, und dass die Strahlungsquelle (23) in und entlang der distalen Kammer Lichtstrahlen aussendet und als Empfangselement dort Lichtstrahlen empfängt.

8. Tor nach einem der Ansprüche 4 bis 7, **dadurch gekennzeichnet, dass** jedes rohrförmige Element (21, 22) mit einer flexiblen, in Längsrichtung verlaufenden Rippe (22a) versehen ist, die sich im Wesentlichen parallel zu der Auslegungsebene des Tores erstreckt.

9. Tor nach Anspruch 4, **dadurch gekennzeichnet, dass** das Trimmelement (20) eine flexible Membran (50) umfasst, die sich über die rohrförmigen Elemente (21, 22) erstreckt, um das Tor in seiner geschlossenen Position effektiv abzudichten.

10. Tor nach Anspruch 1, **dadurch gekennzeichnet, dass** es Sensormittel (21, 22, 23) auch auf den Seiten des Tores umfasst.

11. Tor nach Anspruch 1, **dadurch gekennzeichnet, dass** das Tor eine Vielzahl von boxenartigen, modularen Panelen 1, 2, 3, ein oberes, in Längsrichtung verlaufendes Teil (15) und ein unteres, in Längsrichtung verläufendes Teil (12) zur Versteifung und zum schnell Zusammenbau der Panele (1, 2, 3) und ein Bolzenmittel (14) aufweist, um jedes modulare Panel an jedem longitudinalen Teil zu befestigen.

12. Tor nach Anspruch (12), **dadurch gekennzeichnet, dass** die sich in Längsrichtung erstreckenden Teile (12, 15) rohrförmig sind und dass die Befestigungsmittel eine Vielzahl von Bolzen, die von den sich in Längsrichtung erstreckenden Teilen vorstehen und darin einschraubbar sind, wenigstens eine Öffnung (19) durch die Dicke von jedem der boxenförmigen, modularen Panele (1, 2, 3) umfasst, um einen entsprechenden Bolzen (13) aufzunehmen, der von dem sich in Längsrichtung erstreckenden Teil vorsteht, und dass eine Gleitplatte (10), die durchgehende Öffnungen (11) hat, um Lichter unterschiedlicher Größe zu begrenzen, an einer entsprechenden Öffnung (9) innerhalb jedes boxenförmigen Panels (1, 2, 3) angeordnet ist und so ausgeführt ist, dass sie von einer Ruheposition, in der sie den Kopf eines Bolzens (13) aufnehmen kann; in einer Arbeitsposition bewegbar ist, in der sie an dem Kopf des Bolzens (13) angreift und als fixierende Scheibe für den Bolzen (13) wirkt.

13. Tor nach Anspruch 1, **dadurch gekennzeichnet, dass** es eine Einrichtung (40) zum Einstellen der Stoßkraft aufweist, wenn das Tor geöffnet wird, und der Dämpfungskraft, wenn dasselbe geschlossen wird, wobei die Einrichtung einen länglichen Körper (41), der an dem Tor befestigt werden kann, ein Verankerungselement (48), das an dem Tor befestigt ist für ein Kabel (44), an dem ein Gegengewicht (43) für das Tor mit Hilfe eines Rolle (42) aufgehängt ist, und einen Stift (46) aufweist, der entlang dem länglichen Körper bewegt werden kann und so angeordnet ist, dass er an dem Kabel (44) angreifen kann, um seine Spannung zu variieren.

14. Tor nach Anspruch 13, **dadurch gekennzeichnet, dass** der längliche Körper (41) einen durchgehenden Schlitz (45) aufweist, in dem der Stift (46) gleitbar angeordnet ist, und dass das fixierte Verankerungselement (48) auf dem länglichen Körper (41) vorgesehen ist.

## Revendications

1. Porte basculante proposée avec un mécanisme de basculement (42, 43, 44) et des guides coulissants latéraux fixes, comprenant :
une paire de moyens de détection (21, 22, 23), moyennant quoi, chacun d'eux comprend un élément d'émission et de réception de faisceau placé dans un élément tubulaire respectif (21, 22) en matériau flexible, lesdits moyens de détection (21, 22, 23) étant disposés pour agir indépendamment l'un de l'autre en réaction aux impacts sur l'un ou l'autre bord inférieur intérieur (22) et sur l'un ou l'autre bord inférieur extérieur (21) de la porte, moyennant quoi, lorsque l'un des éléments tubulaires (20, 22) vient en butée contre un obstacle, il est déformé et coupe le faisceau lumineux entre l'émetteur et son élément de réception respectif ;
la porte comprenant, en outre, une unité de contrôle électronique (25) qui est conçue pour recevoir des signaux d'entrée générés par au moins un desdits moyens de détection (21, 22, 23) et pour générer des signaux de contrôle de sortie pour contrôler ledit mécanisme de basculement ; **caractérisée en ce qu'**au moins un desdits éléments tubulaires (21, 22) est proposé avec un diaphragme longitudinal interne disposé dans un plan sensiblement parallèle au plan de la porte et passant par l'axe central de l'élément tubulaire pour diviser sa cavité interne en deux compartiments longitudinaux, avec lesdits éléments d'émission et de réception de faisceau disposés dans le compartiment extérieur par rapport au plan central de la porte.

2. Forte selon la revendication 1, **caractérisée en ce que** chacun desdits, moyens de détection (21, 22, 23) comprend une pluralité d'éléments de détection (23) qui sont positionnés comme des bandes en longueurs (21, 22) de matériau flexible disposées à la partie inférieure de la face intérieure et extérieure de la porte.

3. Porte selon la revendication 1 ou 2, **caractérisée en ce que** chaque élément tubulaire (21, 22) s'étend sur toute la longueur de la porte et positionne à une extrémité de celle-ci une cellule photoélectrique (23) ou une source électroluminescente qui est reliée électriquement à ladite unité de contrôle (25) et, à son autre extrémité, une surface réflectrice ou une surface qui est disposée pour agir en réaction à la source électroluminescente, moyennant quoi, lorsque l'un des éléments tubulaires (21, 22) vient en butée contre un obstacle, il est déformé et coupe le faisceau lumineux entre la source émettrice et son élément sensible respectif, contrôlant ainsi ladite unité de contrôle (25).

4. Porte selon l'une quelconque des revendications 1 à 3, **caractérisée en ce que** les éléments tubulaires flexibles (21, 22) sont un composant d'un élément de compensation (20) s'étendant sur et recouvrant les bords inférieurs extérieurs et intérieurs de la porte, faisant ainsi saillie sur la partie frontale intérieure et extérieure de la porte, l'élément tubulaire sur le bord extérieur (21) agissant en réaction aux obstacles pendant l'ouverture, tandis que l'élément tubulaire pendant l'ouverture, tandis que l'élément tubulaire placé sur le bord interne (22) agit en réaction aux obstacles heurtés alors que la. porte est en cours de fermeture.

5. Porte selon la revendication 4, **caractérisée en ce que** ledit élément tubulaire (21) placé sur le bord extérieure est conçu pour arrêter ledit mécanisme de basculement (42, 43, 44) quand un choc survient.

6. Porte selon la revendication 4, **caractérisée en ce que** ledit élément tubulaire (22) placé sur le bord interne est conçu pour inverser le mouvement angulaire de la porte quand un choc survient.

7. Porte selon l'une quelconque des revendications précédentes, **caractérisée en ce que** ledit diaphragme est disposé dans l'élément tubulaire interne (22), pour diviser sa cavité en un compartiment adjacent à la porte et un compartiment distal, et **en ce que** ladite source émettrice (23) émet des faisceaux lumineux et ledit élément de réception reçoit des faisceaux lumineux dans et le long du compartiment distal.

8. Porte selon l'une quelconque des revendications 4 à 7, **caractérisée en ce que** chaque élément tubulaire (21, 22) est proposé avec une nervure longitudinale (22a) qui s'étend sensiblement parallèlement au plan de pose de la porte.

9. Porte selon la revendication 4, **caractérisée en ce que** ledit élément de compensation (20) comprend une membrane flexible (50) qui s'étend par-dessus lesdits éléments tubulaires (21, 22) pour effectivement fermer la porte hermétiquement dans sa position fermée.

10. Porte selon la revendication 1, **caractérisée en ce qu'**elle comprend également des moyens de détection (21, 22, 23) sur les côtés de la porte.

11. Porte selon la revendication 1, **caractérisée en ce que** ladite porte comprend une pluralité de panneaux modulaires (1, 2, 3) semblables à des boîtes, un élément longitudinal supérieur (15) et un élément longitudinal inférieur (12) pour un renforcement et un assemblage rapide des panneaux (1, 2, 3), et des moyens formant boulons (13) pour fixer chaque panneau modulaire à chaque élément longitudinal.

12. Porte selon la revendication 11, **caractérisée en ce que** lesdits éléments longitudinaux (12, 15) sont tubulaires et ledit moyen de fixation comprend une pluralité de boulons (13) faisant saillie sur les éléments longitudinaux et pouvant être vissés dans lesdits éléments, au.moins une ouverture (9) dans toute l'épaisseur de chaque panneau modulaire (1, 2, 3) semblable à une boîte pour placer un boulon respectif (13) faisant saillie sur un élément longitudinal, et une plaque coulissante (10) qui présente à travers les ouvertures (11) des lumières de délimitation de taille différente, est disposée à une ouverture respective (9) à l'intérieur de chaque panneau (1, 2, 3) semblable à une boîte, et est disposée pour être déplacée d'une position de repos, dans laquelle elle peut recevoir la tête d'un boulon (13), à une position de travail, dans laquelle elle est en prise avec la tête dudit boulon (13) et agit comme une rondelle de fixation pour le boulon (13).

13. Porte selon la revendication 1, **caractérisée en ce qu'**elle comprend un dispositif (40) pour régler la force de pénétration tandis que la porte est en cours d'ouverture et la force d'amortissement pendant que celle-ci est en cours de fermeture, ledit dispositif comprenant un corps allongé (41) qui peut être fixé à la porte, un élément de fixation (48) fixé à la porte pour un câble (44) auquel un contrepoids (43) pour la porte est suspendu au moyen d'une poulie (42), et une broche (46) qui peut être déplacée le long dudit corps allongé et est disposée pour être en prise avec ledit câble (44) pour faire varier sa tension.

14. Porte selon la revendication 13, **caractérisée en ce que** ledit corps allongé (41) comprend une rainure de passage (45) à l'intérieur de laquelle ladite broche (46) est disposée de manière à coulisser et **en ce que**. ledit élément de fixation (48) est proposé sur ledit corps allongé (41).
